# EUROPÄISCHE PATENTSCHRIFT

(11) **EP 1 794 470 B1**
(45) Veröffentlichungstag und Bekanntmachung des Hinweises auf die Patenterteilung: **26.08.2009**
(21) Anmeldenummer: 05789498.2
(22) Anmeldetag: 20.09.2005
(51) Int. Cl.: F16D 65/56

(54) **VERFAHREN ZUR EINSTELLUNG DES LÜFTSPIELS EINER SCHEIBENBREMSE**
METHOD FOR ADJUSTING THE PLAY OF A DISC BRAKE
PROCEDE DE REGLAGE DU JEU A L'OUVERTURE D'UN FREIN A DISQUE

(30) Priorität: 22.09.2004 DE 102004045951
(43) Veröffentlichungstag der Anmeldung: 13.06.2007
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE)
(74) Vertreter: Mattusch, Gundula
(86) Internationale Anmeldenummer: PCT/EP2005/010115
(87) Internationale Veröffentlichungsnummer: WO 2006/032447

(56) Entgegenhaltungen:
- WO-A-03/042019
- WO-A-20/05059396
- US-B1- 6 237 729
- US-B1- 6 238 011
- US-B1- 6 250 434

## Beschreibung

Die Erfindung betrifft ein Verfahren zur Einstellung des Lüftspiels zwischen Bremsbelägen und einer Bremsscheibe einer vorzugsweise pneumatisch betätigten Scheibenbremse mittels wenigstens einer oder mehreren elektromotorisch angetriebenen Nachstellvorrichtung(en).

Anwendungsgebiete der Erfindung sind einerseits das Nachstellen elektrisch angetriebener Nachstellvorrichtungen von pneumatisch oder hydraulisch angetriebenen Scheibenbremsen und andererseits das Nachstellen von Scheibenbremsen, bei denen nicht nur die Nachstellung sondern auch die Zustellung elektromotorisch erfolgt.

Ganz besonders eignet sich die Erfindung zum Einsatz bei Scheibenbremsen mit pneumatisch betätigter Zuspannvorrichtung bzw. mit einer pneumatischen Krafterzeugungsvorrichtung, die auf die Zuspannvorrichtung der Scheibenbremse einwirkt, wobei die Nachstellung der Scheibenbremse elektromotorisch erfolgt. Dabei ist es möglich, ein- oder bevorzugt beidseitig der Bremsscheibe eine oder mehrere elektromotorisch betriebene Nachstellvorrichtungen anzuordnen.

Aus dem Stand der Technik ist es bekannt, bei der Nachstellung von elektromotorisch angetriebenen Verschleißnachstellsystemen zunächst das Lüftspiel jeweils aktuell z.B. mittels eines Sensors zu messen und anschließend eine Korrektur bzw. Nachstellung vorzunehmen. Insofern wird beispielsweise auf den gattungsgemäßen Stand der Technik der EP 0 995 923 A2 verwiesen.

Das Dokument WO03042019 offenbart ein Verfahren gemäß dem Oberbegriff des Anspruchs 1.

Nachteilig ist hieran der Aufwand für die Sensierung der Bestimmungsgrößen und die Störanfälligkeit der in der Bremsmechanik wirkenden Kraft- und Weg- bzw. Drehwinkelsensoren.

Nachteilig ist ferner, daß ein Lüftspielmeßvorgang nur im Zusammenhang mit einer Bremsbetätigung erfolgen kann.

Es soll daher ein Verfahren zur Einstellung eines Lüftspiels einer Scheibenbremse mittels elektromotorisch angetriebener Nachstellvorrichtungen geschaffen werden, welches diese Nachteile vermeidet.

Dabei soll die Einstellung des Lüftspiels ohne zusätzliche Sensorik erfolgen und dennoch ein geringstmögliches Lüftspiel einstellbar sein, wobei auch der Nachteil eines sich ständig wiederholendes schleifenden Anlegens der Bremsbeläge an die Bremsscheibe nicht bzw. nur in geringem Maße in Kauf genommen werden muß.

Die Erfindung löst diese Aufgabe durch das Verfahren des Anspruches 1.

Sie schafft damit ein Verfahren zur Einstellung des Lüftspiels zwischen Bremsbelägen beidseits einer Bremsscheibe einer Scheibenbremse mittels wenigstens einer elektromotorisch angetriebenen Nachstellvorrichtung, bei dem mittels eines Rechners - beispielsweise an der Bremse - Veränderungen des Lüftspiels infolge von Bremsungen mittels einer rechnerischen Prognose oder Simulation ermittelt werden, wobei in die Prognose die Veränderung von Komponenten der Bremse infolge der bei Bremsungen freigesetzten Energie einbezogen wird, und die derart ermittelten Veränderungen in vorgegebenen "geringen" Zeitabständen von z.B. einigen Sekunden (z.B. 2 bis 60 sec) durch entsprechende Einstellvorgänge korrigiert werden.

Insbesondere wird nach einer Bremsung in die Prognose die zunächst erfolgende Ausdehnung der Bremskomponenten und dann das Schrumpfungsverhalten dieser Komponenten infolge der darauffolgenden Abkühlung einbezogen und dann diese einmalige Prognose nach einer Bremsung zur Durchführung mehrerer aufeinanderfolgender Einstellvorgänge nach der Bremsung verwendet.

Es ist zweckmäßig, wenn in die Berechnung der sich bei der Bremsung ausdehnenden und darauffolgend schrumpfenden Bremskomponenten zumindest die Bremsbeläge und die Bremsscheibe einbezogen werden.

Es ist vorteilhaft, ergänzend in relativ zum Zeitabstand der Einstellvorgänge durch die Prognose groß zu wählenden Zeitabständen z.B. jeweils nach einigen Minuten oder z.B. einer halben Stunde eine vollständige Neueinstellung des Lüftspiels mittels eines schleifenden Anlegens der Bremsbeläge mit den Nachstellvorrichtungen an die Bremsscheibe und eines nachfolgenden Zurückstellens auf das Soll-Lüftspiel vorzunehmen. Derart wird das Lüftspiel immer wieder bei längerer Fahrt anhand eines Anlegend der Bremsbeläge an die Scheibe auf den korrekten Wert eingestellt und mögliche Abweichungen der Simulation von den tatsächlichen Verhältnissen korrigiert. Dieser Verfahrensschritt wird zwischen Bremsungen mit einem genügend langen zeitlichen Abstand vorgenommen, wenn genügend Zeit zur Durchführung dieser Einstellung besteht. Wird diese Einstellung z.B. durch eine erneute Bremsung überbrochen, wird zunächst weiter auf die Lüftspieleinstellung anhand der Simulation zurückgegriffen.

Nachfolgend wird die Erfindung anhand der Zeichnung näher beschrieben. Es zeigt:
- Fig. 1: ein Diagramm zur Veranschaulichung der Wärmedehnungs- und Schrump- fungsprozesse an einer Scheibenbremse eines Nutzfahrzeugs; und

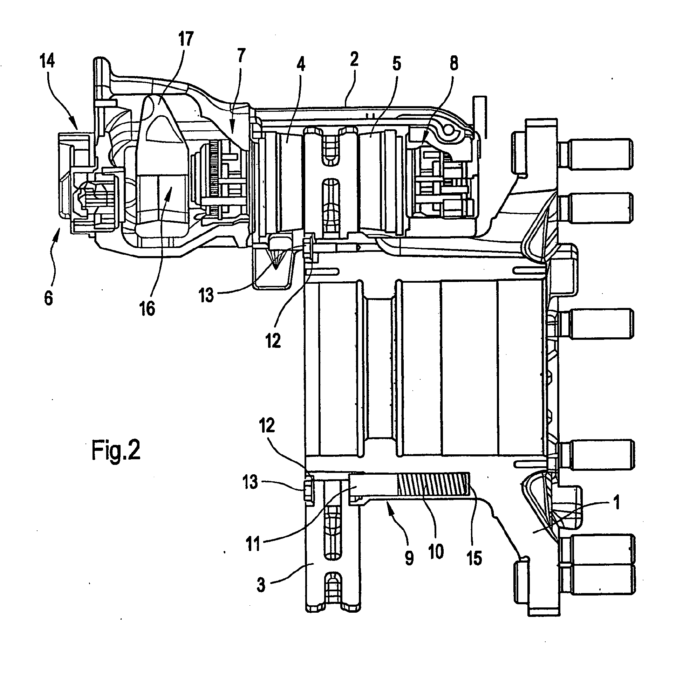

- Fig. 2: eine Scheibenbremse in einer geschnittenen, schematischen Seitenansicht,

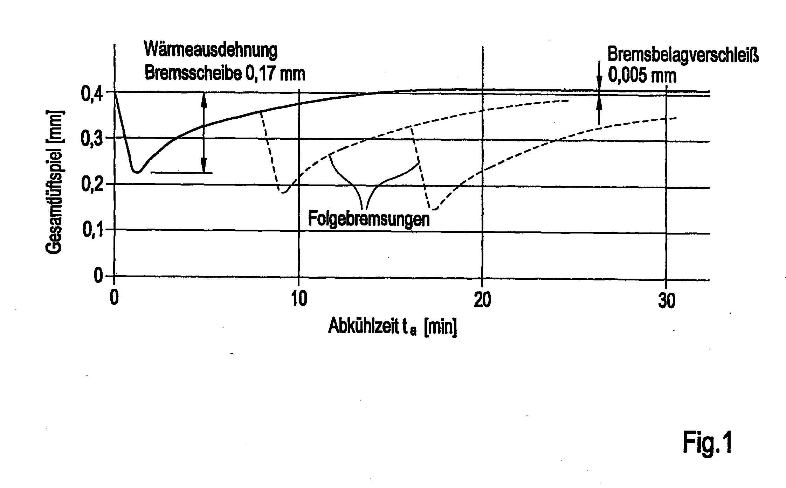

In der Figur 1 ist eine hier beispielhaft als Festsattelbremse ausgebildete Scheibenbremse für Nutzfahrzeuge dargestellt, die einen als Festsattel ausgebildeten Bremssattel 2 aufweist, der eine Bremsscheibe 3 übergreift, die axial verschiebbar und verdrehgesichert auf einem als Achsflansch 1 ausgebildeten Fahrzeugteil angeordnet ist. Der Festsattel 2 ist am Achsflansch 1 unbeweglich fixiert.

Im Festsattel 2 ist eine von einer Kolbenstange eines Bremszylinders betätigbare Zuspannvorrichtung 16 mit einem im Bremssattel exzentrisch gelagerten Drehhebel 17 angeordnet, die derart ausgelegt und konstruiert ist, dass bei einem Verschwenken des Drehhebels 17 Druckstücke (hier nicht detailliert zu erkennen) auf dieser Seite der Bremsscheibe 3 (Zuspannseite genannt) parallel zur Bremsscheibenachse verschoben werden, die eine zuspannseitig angeordnete Bremsbacke 4 gegen die Bremsscheibe 3 pressen, welche sich bei weiter fortschreitender Zuspannbewegung axial in Richtung der weiteren auf der anderen Seite der Bremsscheibe (Reaktionsseite) verschiebt, bis sie dort zur Anlage kommt und die eigentliche Bremswirkung zwischen der Bremsscheibe 3 und den Bremsbelägen 4, 5 einsetzt. Durch die reibende Anlage beider Bremsbacken 4, 5 werden die Bremsscheibe 3 und mit ihr die Radnabe 1 bzw. ein angeschlossenes, nicht dargestelltes Rad abgebremst. Zur Funktion einer beispielhaften Zuspannvorrichtung sei ergänzend auf die WO 02/14708 verwiesen. Ein Rechner in einem Deckel 14 an der Scheibenbremse dient zur Ansteuerung der Elektromotoren 6 und zur Durchführung des nachfolgend beschriebenen Verfahrens zur Lüftspieleinstellung.

Beiden Bremsbacken bzw. - belägen 4, 5 sind jeweils zuspannseitig und reaktionsseitig wenigstens eine, insbesondere je zwei, Nachstellvorrichtungen 7, 8 zugeordnet, mit der ein betriebsbedingter Verschleiß der Bremsbacken 4, 5 ausgleichbar ist, d. h., beispielsweise nach jedem oder mehreren Bremsvorgang(bzw. -vorgängen) erfolgt eine Zustellung der Bremsbacken 4, 5 in Richtung der Bremsscheibe 3 um die Abriebdicke. Die Nachstellvorrichtungen sind elektromechanisch angetrieben, wobei hier auf jeder Seite der Bremsscheibe jeweils ein Elektromotor 6 vorgesehen ist, von denen hier der zuspannseitige Elektromotor 6 zu erkennen ist, der über eine Antriebsverbindung auf Drehspindeln oder dgl. einwirkt, welche bei einem Verdrehen die axiale Position der Druckstücke relativ zur Bremsscheibe 3 verändern. Der Vorteil dieser Nachstellvorgänge liegt unter anderem in der Möglichkeit zur Nutzung "intelligenter" Lüftspielfunktionen, die über ein bloßes Nachstellen der Bremse weit hinausgehen.

Um zu gewährleisten, daß die Bremsscheibe 3 nach Beendigung des Bremsvorganges in ihre Ausgangsposition zurückgeschoben wird, so daß zwischen der äußeren Bremsbacke 5 und der Bremsscheibe 3 ein ausreichendes Freispiel entsteht, sind erfindungsgemäß in Verschieberichtung der Bremsscheibe 3 federnde Druckelemente 9 vorgesehen, an denen die Bremsscheibe 3 anliegt.

Nach einer hier nicht zu erkennenden Variante sind mehrere in Umfangsrichtung gleichmäßig verteilte Druckelemente 9 vorgesehen, die vorzugsweise im Bereich des axial inneren Randes der Bremsscheibe 3 anliegen.

Die durch die Druckelemente 9 bedingte Verschiebung der Bremsscheibe 3 wird begrenzt durch Anschläge 12.

Die feststehenden Anschläge 12 sind durch Schrauben 13 gehalten, die stirnseitig in den Achsflansch 1 eingedreht sind.

Nach Figur 1 ist das Druckelement 9 beispielhaft in kompakter Anordnung zweiteilig ausgebildet. Es umfasst ein Kontaktstück 11, das an der Bremsscheibe 3 anliegt und eine als Schraubenfeder ausgebildete Druckfeder 10 zur Erzeugung der elastischen Vorspannung zwischen dem Anschlag 12 und der Bremsscheibe 3.

Durch die zweiteilige Ausbildung wird wirksam verhindert, daß beim Bremsen entstehende Reibwärme von der erwärmten Bremsscheibe 3 auf die Druckfeder 10 übertragen wird.

Die Druckelemente 9 sind jeweils in eine sich axial erstreckenden Ausnehmung 15 des Achsflansches 1 eingesetzt.

Der Anschlag 12 befindet sich dabei auf der Zuspannseite, so dass die Bremsscheibe von der Reaktionsseite her in Richtung der Zuspannseite nach einer Bremsung zurückgestellt wird

Nach dem Start oder längerer Fahrt wird z.B. mittels sequentiellen Abtastung der Bremsbelagpositionen beider Bremsscheibenseiten (Anfahren der Nachstellvorrichtungen 7, 8 an die Bremsscheibe und Erkennen der Anschlagspositionen beispielsweise aus einer Veränderung der Strom- und/oder Spannungscharakteristik der Versorgungsspannungen bzw. -ströme für die Elektromotoren 6) und einer anschließenden Neupositionierung der Bremsbacken bzw. Bremsbeläge 4, 5 relativ zur Bremsscheibe ein Solllüftspiel eingestellt. Sodann wird dieses anhand einer rechnerischen Prognose nachgestellt.

Figur 1 zeigt ein Diagramm, welches die Änderung des Gesamtlüftspiels einer Nutzfahrzeugscheibenbremse im Verlauf einer Bremsung im sog. Hitzerißtest veranschaulicht. Die Daten des Bremsvorgangs sind:
- Fahrgeschwindigkeit 85 km/h,
- Bremsdauer 40 sec,
- Bremsmoment 2,5 km,
- Bremsscheibendurchmesser von 442 mm,
- Bremsscheibendicke 45 mm,
- Bremsscheibenmasse 25 kg und
- Bremsbelagdicke 21 mm.

Infolge der Bremsung ergibt sich eine Dickenzunahme der Bremsscheibe aufgrund ihrer Erwärmung um 0,17 mm, was zu einer entsprechenden Verkleinerung des Lüftspiels fuhrt.

Erst nach einer Abkühldauer von mehr 10 Minuten wird wieder die Ausgangstemperatur erreicht und erst dann wird der mit 0,005 mm bei diesem Beispiel eingetretenen Bremsbelagverschleiß in einer T.,üftspielvergrößerung wirksam.

Die ebenfalls das Lüftspiel verkleinernd wirkende thermische Ausdehnung des Bremsbelages, welche durch noch komplexere Zusammenhänge bestimmt ist, wird hier nicht näher betrachtet.

Bei Folgebremsungen in Zeitabständen von z.B. weniger als 10 Minuten reicht die Abkühldauer nicht aus, um wieder den Ausgangszustand zu erreichen. Dies führt zu einer weiteren Erhöhung der Bremsscheibentemperatur und zu einer noch weiteren Reduzierung des Lüftspiels.

Um derartige Zustände sicher zu beherrschen, muß entweder ein ausreichend großes Ausgangslüftspiel gewählt werden oder es wird eine Steuerung des Nachstellsystems angewendet, welche dazu in der Lage ist, das Lüftspiel ständig den veränderten Gegebenheiten anzupassen.

Das vergrößerte Lüftspiel bewirkt dabei große Betätigungswege der Bremse und ein verzögertes Ansprechverhalten.

Gerade diese Nachteile mechanischer Nachstellvorrichtungen werden durch eine erfindungsgemäße Ansteuerung der elektromotorischen Nachstellvorrichtungen 7, 8 beseitigt.

Derart werden nach Einstellung des Lüftspiels mittels eines Anlegens der Bremsbeläge 4, 5 an die Bremsscheibe 3 und mittels eines nachfolgenden Zurückstellens auf das Lüftsollspiel z.B. nach jedem Start des Fahrzeuges oder nach längerer Fahrt Veränderungen des Lüftspiels, welche z.B. durch Verschleiß, Wärmeausdehnung und Schrumpfungsvorgänge der Reibkörper eintreten, durch eine rechnerische Prognose mittels Auswertung der zwischenzeitlichen Bremsaktivitäten unter Einbeziehung der Konstruktions- und Materialdaten der Bremsenbauteile sowie der Fahrzustände ermittelt und die entsprechend eingetretenen Veränderungen in geringen Zeitabständen durch entsprechende Einstellvorgänge an den Elektromotoren 6 und den diesen zugeordneten Nachstellvorrichtungen 7, 8 korrigiert.

Das Verhalten der Scheibenbremse kann beispielsweise einmalig ausgemessen werden, wobei diese Messwerte dann als Grundlage für das Prognoseverfahren dienen.

Bei der Einbeziehung des bei der Bremsung auftretenden Verschleißes und der über die Zeit, insbesondere geometrischen Veränderungen von Komponenten der Bremse infolge der bei Bremsung freigesetzten Energie empfiehlt es sich, folgende Parameter einzubeziehen.

Veränderungen des Lüftspiels ergeben sich im allgemeinen durch Verschleiß von Bremsbelägen und Bremsscheibe sowie durch Wärmeausdehnung bzw. Schrumpfung von Bremsbelägen, Bremsscheibe oder Bremsenbauteile.

Lüftspielvergrößerungen erfolgen dabei im allgemeinen durch den Verschleiß von Bremsbelägen und Bremsscheibe, durch die Schrumpfung von Bremsbelägen und Bremsscheibe infolge Abkühlung, durch Schrumpfung der Spreizeinrichtung (Hebel, Druckstempel, EDC) infolge Abkühlung und/oder durch Aufweitung des Sattelrahmens infolge einer Wärmeausdehnung.

Lüftspielverkleinerungen erfolgen dagegen durch Wärmeausdehnung von Bremsbelägen und Bremsscheibe, durch Wärmeausdehnung der Spreizeinrichtung und/oder Schrumpfung des Sattelrahmens infolge Abkühlung.

All die vorgenannten Parameter können entweder einzeln oder in Kombination in die Prognose mit einbezogen werden.

Im allgemeinen laufen dabei die Vorgänge, die Lüftspiel vergrößernde und Lüftspiel verkleinernde Auswirkungen haben, zeitlich parallel mit stark unterschiedlicher Temperatur-und Zeitabhängigkeit ab.

Der Verschleiß der Reibkörper (Bremsbeläge und Bremsscheibe) ist im wesentlichen durch die Bremsarbeit, d.h. durch die relativ exakt ermittelbare Bremsenergie bestimmt.

Ein weiterer Einfluß ist durch die Temperatur der Reibkörper gegeben. Dieser Einfluß ist für den Bremsbelagverschleiß deutlich stärker ausgeprägt als für die Bremsscheibe und entgegengesetzt gerichtet. Der Verschleiß der Bremsbeläge ergibt sich in einem Hitzeresttest bei 650 °C beispielsweise typischerweise mehr als zweimal so hoch wie bei einem Verschleißtest mit 250 °C Bremsscheibentemperatur. Die Temperatur von Bremsscheibe und Bremsbelägen ist wiederum ursächlich von der an der Bremse in Wärme umgewandelte Reibarbeit sowie den Abkühlbedingungen abhängig.

Die Reibarbeit der Bremse läßt sich auf einfache Weise ermitteln, wenn der Bremsvorgang in eine Vielzahl kleiner Raddrehwinkelabschnitte unterteilt wird, wobei die Größe dieser Raddrehwinkelabschnitte so gewählt wird, daß für eine genügend genaue Betrachtung der Bremszylinderdruck innerhalb dieses Abschnittes als konstant betrachtet werden kann.

Für die Bestimmung des Bremsbelag- und Bremsscheibenverschleißes (als Summenwert) bietet es sich dagegen an, experimentell ermittelte Durchschnittswerte zugrunde zu legen. Ein typischer Wert ist z.B. 0,132 mm spezieller Summenverschleiß von Bremsbelägen und Bremsscheibe pro 100 MJ umgewandelter Reibenergie.

Je nach Auslegung des jeweiligen Bremssystems läßt sich derart vorzugsweise aus einer Mischung von experimentell ermittelten Daten und rechnerisch ermittelten Werten ein geeigneter Parametersatz bestimmen, der in die Prognose mit einbezogen werden kann.

Ergänzend kann z.B. die Kühlleistung der Bremsscheibe auf einem Schwungmassenprüfstand oder im Fahrzeugversuch aus Abkühlkurven ermittelt werden.

Ausgewertet wird z.B. der Temperaturverlauf nach Beendigung der Aufheizungen durch die Bremsvorgänge.

### Bezugszeichenliste

1. Achsflansch
2. Bremssattel
3. Bremsscheibe
4. Bremsbacke
5. Bremsbacke
6. Elektromotor
7. Nachstellvorrichtung
8. Nachstellvorrichtung
9. Druckelement
10. Druckfeder
11. Kontaktstück
12. Anschlag
13. Schraube
14. Deckel
15. Ausnehmung
16. Zuspannvorrichtung
17. Drehhebel

## Patentansprüche

1. Verfahren zur Einstellung des Lüftspiels zwischen Bremsbelägen (4, 5) und einer Bremsscheibe (3) einer vorzugsweise pneumatisch betätigten Scheibenbremse mittels wenigstens einer oder mehreren elektromotorisch angetriebenen Nachstellvorrichtung(en) (7, 8), bei dem
a) mittels eines Rechners Veränderungen des Lüftspiels infolge von Bremsungen sensorlos ermittelt werden, **dadurch gekennzeichnet, dass** die Veränderungen des Lüftspiels mittels einer rechnerischen Prognose ermittelt werden und
b) wobei in die Prognose
o der bei der Bremsung auftretende Verschleiß und
o die zeitliche Veränderung von Komponenten der Bremse infolge der bei Bremsungen freigesetzten Energie einbezogen wird,
c) und die derart ermittelten Veränderungen in vorgegebenen Zeitabständen durch entsprechende Einstellvorgänge an der wenigstens einen oder den mehreren Nachstellvorrichtung(en) (7, 8) korrigiert werden.

2. Verfahren nach Anspruch 1, **dadurch gekennzeichnet, dass** nach einer Bremsung in die Prognose die zunächst erfolgende Ausdehnung der Bremskomponenten und dann das Schrumpfungsverhalten dieser Komponenten infolge der darauffolgenden Abkühlung einbezogen wird und das diese einmalige Prognose nach einer Bremsung zur Durchführung mehrerer aufeinanderfolgender Einstellvorgänge nach der Bremsung verwendet wird.

3. Verfahren nach Anspruch 1 oder 2, **dadurch gekennzeichnet, dass** in relativ zum Zeitabstand der Einstellvorgänge durch die Prognose groß zu wählenden Zeitabständen eine Neueinstellung des Lüftspiels mittels eines schleifenden Anlegens der Bremsbeläge (4, 5) mit den Nachstellvorrichtungen (7, 8) an die Bremsscheibe (3) und eines nachfolgenden Zurückstellens auf das Soll-Lüftspiel erfolgt.

4. Verfahren nach Anspruch 1, 2 oder 3, **dadurch gekennzeichnet, dass** in die Prognose der sich bei der Bremsung ausdehnenden und darauffolgend schrumpfenden Bremskomponenten zumindest die Bremsbeläge (4, 5) und die Bremsscheibe (3) einbezogen werden.

## Claims

1. A method for adjusting the air play between brake linings (4, 5) and a brake disk (3) of a preferably pneumatically actuated disk brake by means of at least one or more electromotively driven adjusting device(s) (7, 8), in which method
a) by means of a processor, changes in the air play as a result of braking operations are determined without sensors,
**characterized in that** the changes in the air play are determined by means of a mathematical prognosis,
b) wherein
• the wear occurring during the braking operation and
• the time-based change of the components of the brake as a result of the energy released during braking operations is incorporated in the prognosis,
c) and the changes determined in this way are corrected at predefined time intervals by means of corresponding adjusting processes by the at least one or more adjusting device(s) (7, 8).

2. The method as claimed in claim 1, **characterized in that**, after a braking operation, the initially occurring expansion of the brake components and then the contraction behavior of said components as a result of the subsequent cooling is incorporated in the prognosis, and **in that** said one-off prognosis after a braking operation is used to carry out a plurality of successive adjusting processes after the braking operation.

3. The method as claimed in claim 1 or 2, **characterized in that**, at time intervals which are to be selected by means of the prognosis to be larger than the time interval of the adjusting processes, a resetting of the air play is carried out by means of placing the brake linings (4, 5) in grinding contact against the brake disk (3) with the adjusting devices (7, 8) and by means of a subsequent resetting to the nominal air play.

4. The method as claimed in claim 1, 2 or 3, **characterized in that** at least the brake linings (4, 5) and the brake disk (3) are incorporated in the prognosis of the brake components which expand and subsequently contract during the braking operation.

## Revendications

1. Procédé à régler le jeu d'aération entre des garnitures de frein (4, 5) et un disque de frein (3) d'un frein à disque commandé, de préférence, de façon pneumatique moyennant au moins un ou plusieurs dispositifs de rattrapage (7, 8) à commande électromotrice, dans lequel
a) des changements du jeu d'aération induits par des opérations de serrage de frein sont établis moyennant un ordinateur,
**caractérisé en ce que** les changements du jeu d'aération sont établis par prévision mathématique et
b) dans lequel
o l'usure apparaissant au cours de serrage du frein et
o le changement des composants du frein au cours de temps, en vertu de l'énergie dégagée au cours des opérations de serrage de frein
sont considérés dans la prévision mathématique,
c) et les changements ainsi établis sont corrigés aux intervalles de temps prédéterminés par des opérations appropriées de réglage audit au moins ou auxdits plusieurs dispositif(s) de rattrapage.

2. Procédé selon la revendication 1, **caractérisé en ce qu'**après une opération de serrage de frein, la dilatation des composants du frein, qui apparaît d'abord, et ensuite le comportement en contraction de ces composants, induit par le refroidissement suivant, sont considérés dans la prévision mathématique, et **en ce que** cette prévision mathématique unique après une opération de serrage de frein est utilisée afin de réaliser plusieurs opérations de réglage successives après le serrage de frein.

3. Procédé selon la revendication 1 ou 2, **caractérisé en ce qu'**aux intervalles de temps, qui la prévision mathématique doit choisir à une grande valeur relativement à l'intervalle de temps entre les opérations de réglage, un réajustage du jeu d'aération se fait par voie d'application abrasive des garnitures de frein (4, 5) moyennant lesdits dispositifs de rattrapage (7, 8) audit disque de frein (3) et par voie d'une remise suivante au jeu d'aération exigé.

4. Procédé selon la revendication 1, 2 ou 3, **caractérisé en ce qu'**au moins lesdites garnitures de frein (4, 5) et ledit disque de frein (3) sont considérés dans la prévision mathématique des composants de frein, qui subissent une dilatation et ensuite une contraction au cours de l'opération de serrage de frein.
